# NEUE EUROPÄISCHE PATENTSCHRIFT

(11) **EP 0 775 226 B2**
(45) Veröffentlichungstag und Bekanntmachung des Hinweises auf die Entscheidung über den Einspruch: **18.04.2001**
(45) Hinweis auf die Patenterteilung: 03.06.1998
(21) Anmeldenummer: 95929842.3
(22) Anmeldetag: 10.08.1995
(51) Int. Cl.: D06L 3/02, C11D 3/39, D21C 9/16

(54) **VERWENDUNG EINES STABILISIERUNGSMITTEL-KONZENTRATS FÜR WÄSSRIGE BLEICH- UND BEHANDLUNGSLÖSUNGEN AUF BASIS VON WASSERSTOFFPEROXID UND/ODER ANDEREN ANORGANISCHEN UND/ODER ORGANISCHEN PEROXOVERBINDUNGEN**
USE OF CONCENTRATE OF STABILISERS FOR AQUEOUS BLEACHING AND TREATING SOLUTIONS BASED ON HYDROGEN PEROXIDE AND/OR OTHER INORGANIC AND/OR ORGANIC PEROXO COMPOUNDS
UTILISATION D'UN CONCENTRE D'AGENTS STABILISANTS POUR SOLUTIONS AQUEUSES DE BLANCHIMENT ET DE TRAITEMENT A BASE DE PEROXYDE D'HYDROGENE ET/OU D'AUTRES COMPOSES PEROXO ORGANIQUES ET/OU INORGANIQUES

(30) Priorität: 10.08.1994 DE 4428360
(43) Veröffentlichungstag der Anmeldung: 28.05.1997
(73) Patentinhaber: WOELLNER-SILIKAT GMBH, 67065 Ludwigshafen (DE)
(72) Erfinder: BURKA, Heinz, D-67141 Neuhofen (DE); SCHELLENBERGER, Josef, D-68809 Neulu heim (DE)
(74) Vertreter: Becker Kurig Straus
(86) Internationale Anmeldenummer: EP9503179
(87) Internationale Veröffentlichungsnummer: WO9605354

(56) Entgegenhaltungen:
- EP-A- 0 210 952
- EP-A- 0 557 730
- WO-A-93/13112
- DE-A- 2 828 416
- GB-A- 1 123 071
- US-A- 2 927 082
- WOCHENBLATT FÜR PAPIERFABRIKATION, 21:923-927(1988)

## Beschreibung

Die Erfindung betrifft den in den Patentansprüchen angegebenen Gegenstand.

Die Verwendung von Wasserstoffperoxid oder Wasserstoffperoxid-abspaltenden Substanzen zum Bleichen, insbesondere zum Bleichen zellulosehaltiger Fasem oder Gewebe, z.B. in der Holzschliff-, Zellstoff- und Papiererzeugung, Textilveredlung, Textilwäsche, zum Deinken von Altpapier und dergleichen ist seit langem bekannt.

Desgleichen ist bekannt, daß zur Stabilisierung der in der Regel alkalischen, wasserstoffperoxidhaitigen Bleich- und Behandlungsflotten gegen vorzeitige Zersetzung, d.h. Wasserstoffperoxidabbau, Wasserglas, also Alkalisilikate, Magnesiumsalze, insbesondere Magnesiumsilikat, welches auch in situ gebildet werden kann, sowie verschiedene organische Komplexbildner, wie insbesondere Nitrilotriacetat (NTA), Ethylendiamintetraacetat (EDTA), Diethylentriaminpentaacetat (DTPA) dienen können, wobei als Wirkungsmechanismus insbesondere die Komplexierung bzw. die kolloidale Umhüllung von die Zersetzung des Wasserstoffperoxids fördernden Metallionen bzw. -verbindungen, wie z. B. Eisen-, Mangan-, Schwermetallverbindungen, angenommen wird, siehe z.B. Taschenbuch für die Bleichereipraxis, Firmenschrift der Firma Peroxid-Chemie GmbH, Höllriegelskreuth, 3. Aufl., 1980.

Auch die Verwendung hydroxylgruppenhaltiger organischer Säuren, wie z.B. Glycolsäure (= Hydroxyessigsäure) bzw. deren Salze zur Bleichstabilisierung wurde empfohlen.

Als besonders wirksam zur Stabilisierung alkalischer Bleichlösungen auf Wasserstoffperoxid-Basis hat sich in der Praxis der kombinierte Zusatz von Wasserglas/Alkalisilikat) bzw. Magnesiumsilikat und einem Aminopolycarboxylat-Komplexbildner wie EDTA und DTPA bewährt.

Aus der EP-A-210 952 und der EP-A-210 132 sind wäßrige, alkalische, silikathaltige Zusammensetzungen zum Bleichen von zellulosehaltigen Fasermaterialien in Gegenwart von Perverbindungen bekannt. Diese wäßrigen Zusammensetzungen bestehen zwingend aus einer Aminopolyalkylenphosphonsäure einer Alkan-polyphosphonsäure und/oder einer Polyaminocarbonsäure einer Polyhydroxyverbindung, einem Alkalimetallsilikat, einem Alkalimetallhydroxid, einem Magnesiumsalz und einem Alkalimetallsalz einer Alkyl-, Aryl- oder Alkaryldisulfonsäure als anionischem Dispergator. Nachteilig bei den vorerwähnten Aminopolyalkylenphosphonsäuren ist, daß sie in biologischen Kläranlagen sehr schwer biologisch abbaubar bzw. überhaupt nicht abbaubar sind.

Aus der DE-A-28 28 416 ist ebenfalls eine Zubereitung zur Stabilisierung von Wasserstoffperoxid enthaltenden Bädern bekannt. Diese Zubereitung enthält eine Formulierung auf Grundlage von Natriumsilikat und eines aus Phosphonsäurederivaten gebildeten Magnesiumkomplexes.

Gravierende Nachteile dieser Komplexbildner EDTA und DTPA sowie der Phosphonsäurederivate sind jedoch darin zu sehen, daß sie einerseits in einer biologischen Kläranlage sehr schwer biologisch abbaubar sind, andererseits auf Grund ihrer hohen Komplexbildungskonstanten (z.B. 1g K MeH EDTA für Schwermetalle ca. 13 bis 20; 1g K Me DTPA für Schwermetalle ca. 15 bis 28) eine Remobilisierung von Schwermetallen aus dem Sediment von Gewässern zu befürchten ist, wenn zu große Mengen dieser Komplexbildner eingetragen werden.

Eine befriedigende Lösung z.B. durch Einsatz biologisch abbaubarer Komplexbildner oder ökologisch unproblematischer Zeolithe zum Vermeiden der störenden Einflüsse von Schwermetallen wie Eisen, Mangan, Kupfer und dergleichen ist jedoch bisher unter technologischen und wirtschaftlichen Aspekten nicht gefunden worden, so daß heute noch DTPA in weitem Umfang zur Stabilisierung peroxidhaltiger Bleichbäder eingesetzt wird, insbesondere bei der Zellstoff- und Holzschliff- und Textilbleiche.

In der GB-A 2 016 540 wird die Verwendung von Magnesiumheptogluconat zur Stabilisierung von festen Detergentien, welche Persalze enthalten, beschrieben. Diese Detergentien sollen sowohl im häuslichen Bereich als auch in der Textilindustrie, z.B. beim Waschen von Wäschestücken eingesetzt werden. GB-A 2016 540 bezieht sich ausschließlich auf pulverförmige Zubereitungen, z.B. sprühgetrocknete Stabilisatoren oder pulverförmigen Detergenzien.

US-A-2,927,082 beschreibt sowohl in den Patentansprüchen als auch in den Beispielen 1 bis 4 Bleichlösungen. auf Basis von Wasserstoffperoxyd. Gemäß Bleichlösung A ist weiterhin Natriumsilikat sowie gemäß Bleichlösung B Glukonsäure und Magnesiumsulfat in den jeweiligen Bleichlösungen enthalten. Gemäß US-A-2,927,082 werden mit den vorgenannten Lösungen die besten Bleichresultate bei einem pH-Wert von etwa 12 erreicht.

Daher ist es Aufgabe der Erfindung, eine technologisch und wirtschaftlich zufriedenstellende Substitution dieser schwer abbaubaren Komplexbildner in Bleichprozessen wie Textil-, Faser-, Holzschliff-, Zellstofibleiche u.ä., beim Deinking von Altpapier uns sonstigen Behandlungsverfahren unter Einsatz von Wasserstoffperoxid zu erreichen.

Diese Aufgabe wird durch das erfindungsgemäße biologisch abbaubare Stabilisierungsmittel-Konzentrat gemäß Anspruch 1 gelöst.

In den Unteransprüchen sind vorteilhafte Ausführungsformen der Erfindung enthalten.

Es wurde nun festgestellt, daß überraschenderweise der Einsatz des ökologisch unerwünschten DTPA oder sonstiger biologisch schlecht abbaubarer Komplexbildner ohne Qualitätseinbußen und unter Aufrechterhaltung der Prozeßwirtschaftlichkeit eliminiert werden kann, wenn man zur Stabilisierung der alkalischen, peroxidhaltigen Bleich- oder Behandlungslösungen eine Kombination von Alkalisilikaten ("Wasserglas"), Alkalihydroxiden und wasserlöslichen Komplexen mehrwertiger Metalle von ein- oder mehrwertigen Polyhydroxycarbonsäuren und gegebenenfalls weiteren Hilfsstoffen aus der Gruppe der Lösungsvermittler und der Tenside, insbesondere der Alkyl(C₄₋₁₆)oligosaccharide verwendet.

Als Beispiel für solche wasserlöslichen Komplexe mehrwertiger Metalle seien die nachfolgend aufgeführten genannt: Magnesium-, Calcium-, Aluminium-Komplexe der Glycolsäure, Glycerinsäure, Weinsäure, Traubensäure, Tartronsäure, Apfelsäure, Citronensäure, Milchsäure, Gluconsäure, Glucoheptonsäure.

Die Verwendung von Hydroxycarbonsäuren oder ihrer wasserlöslichen Salze zur Komplexierung mehrwertiger lonen im alkalischen Milieu ist seit langem bekannt (Römpp's Chemielexikon, 8. Aufl., Franckh'sche Verlagsbuchhandlung, Stuttgart, 1981, Seiten 1503/4 -D-Gluconsäure; ibid. Seiten 2497/8 - Maskierung; Firmenschrift Natriumgluconat der Firma Roquette Frères, F-62136 Lestrem, 1984).

Diese Wirksamkeit macht man sich jedoch bis heute überwiegend im Bereich der Reinigung, Entkalkung, Entrostung, Wasseraufbereitung, Kühlwasserbehandlung zunutze. Für die Stabilisierung wäßriger Bleichlösungen auf Peroxidbasis wurde der Einsatz von Alkalisalzen von Hydroxycarbonsäuren versucht, erbrachte jedoch hinsichtlich der Stabilisierung des Wasserstoffperoxids bzw. der erhaltenen Weißgrade unter sonst gleichen Bedingungen nicht die bei Verwendung von Aminopolycarboxylat-Komplexbildnern wie EDTA oder DTPA erzielbaren Ergebnisse. Erst die Kombination gemäß Anspruch 1 brachte vergleichbare Ergebnisse.

Diese Kombination wird durch Zusatz eines einzigen, lagerstabilen und klaren Kombinationsprodukts gemäß Anspruch 1 zu der alkalischen Bleichlösung auf einfache Weist erzeugt. werden.

Als besonders geeignet haben sich hierbei wäßrige Lösungen aus Natriumsilikat, Natrium-Magnesiumgluconat bzw. Natrium-Magnesiumglucoheptanat, wie in Beispiel 1 beschrieben, herausgestellt.

Zum Nachweis der Leistungsfähigkeit derartiger Stabilisierungssysteme für peroxidische Bleich- oder Behandlungslösungen können unterschiedliche Methoden verwendet werden: Zum einen bestimmt man den Abbau von Wasserstoffperoxid in einer Modell-Lösung bei definierter Temperatur, gegebenenfalls unter Zusatz definierter Mengen an Metallverunreinigungen (z.B. Eisen- und/oder Mangansalze) über eine festgelegte Zeitdauer in Abhängigkeit von den zugesetzten Stabilisierungsmitteln. Zum anderen kann auch im Labor ein Bleichversuch an Holzschliff oder Zellulosefasern durchgeführt werden und aus dem erhaltenen Faserstoff ein Blatt gebildet werden, dessen Weißgrad gemessen wird und die Effizienz des Systems dokumentiert. Schließlich zeigt der Praxistesteinsatz z.B. bei der Holzschliff- oder Zellulosebleiche oder in Deinkingverfahren von Altpapier. ob die Anforderungen, insbesondere hinsichtlich des Weißgrades, erfüllt werden.

### Beispiel 1:

### Stabilisator-Lösungen (Konzentrate):

Eine Lösung von 50,0 % Natrium-Magnesiumgluconat (Na₂Mg(Gluc)₂) in destilliertem Wasser und 2,5 % Natriumhydroxid in Wasser wird mit einer Lösung von 36,3 % Natriumsilikat (mit einem Gewichtsverhältnis SiO₂:Na₂O=2,0) im Verhältnis 1:99 (Stabilisator A), 2,5:97,5 (Stabilisator B), 5:95 (Stabilisator C), 10:90 (Stabilisator D) vermischt. Es resultieren lagerstabile klare Lösungen, d.h. Konzentrate, welche für die nachfolgenden Stabilitäts- und Bleichuntersuchungen als Zusätze eingesetzt werden.

### Beispiel 2:

### Stabilitätsprüfung von Wasserstoffperoxidlösungen:

Eine Lösung von 0,2 % Wasserstoffperoxid in Leitungswasser mit 18 °dH wird mit Eisen(III)nitrat und Mangan(ll) nitrat in einer Menge versetzt, daß pro Liter Lösung 10 mg Eisen und 3 mg Mangan enthalten sind.

Diese Lösung wird sowohl als solche hinsichtlich der Zersetzung des Wasserstoffperoxids getestet als auch mit unterschiedlichen Stabilisatoren gemäß Tabelle I versetzt und ebenfalls hinsichtlich der Stabilität des Wasserstoffperoxids geprüft, wobei alle Testlösungen unverzüglich nach dem Ansetzen auf den pH-Wert 10,0 eingestellt und bei 50 °C gelagert werden.

Sofort nach Ansetzen der Testlösung sowie nach 1, 2 und 3 Stunden wird mittels 0,1 N Cer(IV)sulfat-Lösung der Wasserstoffperoxidgehalt ermittelt. In Tabelle I sind alle Restperoxidgehalte in % des jeweiligen Ausgangswertes angegeben.

**Tabelle I**

| Stabilität von alkalischen Wasserstoffperoxid-Lösungen (pH-Wert 10,0/10 mg Fe/ℓ, 3 mg Mn/ℓ) (alle %-Angaben für die Zusätze sind Gew.-%, bezogen auf die Gesamtlösung) | | | | | |
|---|---|---|---|---|---|
| | Zusatz | Anfang | 1 Std. | 2 Std. | 3 Std |
| 1 | ohne | 100 | 68 | 44 | 29 |
| 2 | 0,02 % DTPA | 100 | 99,4 | 98,2 | 87,6 |
| 3 | 0,06 % Na-Silikat Na₂O/ SiO₂=2,0 | 100 | 91,2 | 90,6 | 75,6 |
| 4 | 0,04 % Na-Silikat + 0,02 % DTPA | 100 | 100 | 100 | 90, 5 |
| 5 | 0,2 % Stabilisator A | 100 | 100 | 99,4 | 82,4 |
| 6 | 0,2 % Stabilisator B | 100 | 100 | 100 | 90,6 |
| 7 | 0,2 % Stabilisator C | 100 | 100 | 100 | 89,0 |
| 8 | 0,2 % Stabilisator D | 100 | 100 | 100 | 89,1 |
| 9 | 0,02 % Na-Gluconat | 100 | 78,5 | 48,3 | 35,6 |
| 10 | 0,02 % Na-Gluconat + 0,04 % Na-Silikat | 100 | 88,5 | 85,8 | 78,1 |

Die Zahlenangaben geben den jeweiligen titrierbaren Aktivsauerstoffgehalt, bezogen auf den Ausgangswert (als 100 %) wieder.

Aus den ermittelten Restgehalten an Wasserstoffperoxid wird deutlich, daß mit den erfindungsgemäßen (biologisch abbaubaren) Stabilisatorsystemen (Stabilisator A, B, C, D) eine vergleichbar gute Stabilisierung zu erzielen ist, wie mit dem Stabilisator DTPA (nicht biologisch abbaubar).

### Beispiel 3:

Im Labortest wird Fichtenholzschliff bei einer Stoffdichte von 12,5 % bei Verwendung des vorhandenen Betriebswassers während 2 Stunden bei 70 °C mit 4 % Wasserstoffperoxid (bezogen auf die Holzschliffmenge) unter Zusatz unterschiedlicher Stabilisatorsysteme gebleicht: (End-pH-Wert 7,5 bis 8,5). Die Zusätze sowie die resultierenden Weißgradsteigerungen sind in Tabelle II angegeben.

Ersichtlich wird mit den erfindungsgemäßen Stabilisatorsystemen (Stabilisator A und B aus Beispiel 1) eine vergleichbare Weißgradsteigerung erzielt wie mit dem Stabilisatorsystem Natriumsilikat/Magnesiumsalze/DTPA.

**Tabelle II**

| Holzschliffbleiche (Stoffdichte 12,5 %) (alle % Angaben bezogen auf Holzschliffmenge otro) | | | | |
|---|---|---|---|---|
| | H₂O₂ | NaOH | Stabilisator | Weißgradsteigerung (Punkte) |
| 1 | 4 % | 1,87 | 3 % Na-Silikat 38/40 + 0,10 % Mg-DTPA | 10,4 |
| 2 | 4% | 0,94 | 3,25 % Stabilisator A | 10,3 |
| 3 | 4 % | 0,94 | 3,25 % Stabilisator B | 10,0 |

## Patentansprüche

1. Verwendung eines lagerstabilen, flüssigen und klar löslichen, biologisch abbaubaren Stabilisierungsrnittel-Konzentrats für wäßrige Bleich- und Behandlungslösungen auf Basis von Wasserstoffperoxid und/oder anderen anorganischen und/oder organischen Peroxoverbindungen in der Holzschliff-, Zellstoff- und Papiererzeugung sowie zum Deinken von Altpapier, sowie zur Behandlung cellulosehaltiger Gewirke und Gewebe, bestehend aus der Kombination der folgenden Komponenten:
(a) wasserlösliche Silikate, insbesondere Alkalisilikate,
(b) wasserlösliche Komplexe mehrwertiger Metalle, ausgewählt aus der Gruppe Magnesium, Calcium, Aluminium, mit Anionen ein- oder mehrwertiger Mono- oder Polyhydroxycarbonsäuren.
(c) Alkalihydroxiden,
(d) gegebenenfalls weiteren Hilfsstoffen aus der Gruppe der Lösungsvermittler und der Tenside insbesondere der Alkyl(C₄₋₁₆)oligosaccharide.

2. Verwendung gemäß Anspruch 1, dadurch gekennzeichnet, daß es sich bei den wasserlöslichen Alkalisilikaten (a) um Lithtum-, Natrium-, Kaliumsilikate oder um Silikate organischer Stickstoffbasen mit einem Molverhältnis von SiO₂ zu M₂O von 0.5 bis 3.3, insbesondere von 1,5 bis 3,0, handelt.

3. Verwendung gemäß Anspruch 1, dadurch gekennzeichnet, daß die Hydroxycarbonsäuren 2 bis 10 Kohlenstoffatome mit geradliniger oder verzweigter C-Kettenstruktur aufweisen.

4. Verwendung gemäß einem der vorhergehenden Ansprüche, dadurch gekennzeichnet, daß die Hydroxycarbonsäure eine von Zuckern aus der Gruppe der Pentosen, Hexosen und Heptosen abgeleitete Zuckercarbonsäure insbesondere Gluconsäure und/oder Glucoheptonsäure ist.

5. Verwendung gemäß einem der vorhergehenden Ansprüche dadurch gekennzeichnet, daß das Stabilisierungsmittel-Konzentrat 20 bis 40 Gew - %. insbesondere 30 bis 40 Gew.-%, wasserlösliche Silikate, 0.01 bis 20 Gew.-% insbesondere 0.1 bis 10 Gew -%, wasserlösliche Komplexe mehrwertiger Metalle, aus der Gruppe Magnesium, Calcium, Aluminium, mit Anionen ein- oder mehrwertiger Mono- oder Polyhydroxycarbonsäuren enthält.

6. Verwendung nach Anspruch 1 dadurch gekennzeichnet, daß das Stabilisierungsmitte-Konzentrat 0,05 bis 5 Gew.-%% insbesondere 0.05 bis 1 Gew.-% Alkyl(C₄₋₁₆)oligosaccharid enthält.

## Claims

1. The use of a storage-stable, liquid and completely soluble biodegradable stabilizer concentrate for aqueous bleaching and treatment solutions based on hydrogen peroxide and/or other inorganic and/or organic peroxo compounds in the production of mechanical wood pulp, wood pulp and paper, and also for de-inking waste-paper, and also for treating cellulosic knitted and woven goods, consisting of the combination of the following components:
(a) water-soluble silicates, in particular alkali metal silicates,
(b) water-soluble complexes of polyvalent metals, selected from the group consisting of magnesium, calcium, aluminum, with anions of monovalent or polyvalent mono- or polyhydroxycarboxylic acids,
(c) alkali metal hydroxides,
(d) if appropriate other auxiliaries from the group consisting of solubilizers and surfactants, in particular alkyl(C₄₋₁₆)oligosaccharides.

2. The use according to claim 1, characterized in that the water-soluble alkali metal silicates (a) are silicates of lithium, sodium or potassium, or silicates of organic nitrogen bases having a molar ratio of SiO₂ to M₂O from 0.5 to 3.3., in particular of 1.5 to 3.0.

3. The use according to claim 1, characterized in that the hydroxycarboxylic acids have 2 to 10 carbon atoms and an unbranched or branched carbon chain structure.

4. The use according to one of the preceding claims, characterized in that the hydroxycarboxylic acid is a sugar acid derived from the group consisting of the pentoses, hexoses and heptoses, in particular gluconic acid and/or glucoheptonic acid.

5. The use according to one of the preceding claims, characterized in that the stabilizer concentrate comprises 20 to 40 % by weight, in particular 30 to 40 % by weight, of water-soluble silicates, 0.01 to 20 % by weight, in particular 0.1 to 10 % by weight, of water-soluble complexes of polyvalent metals, selected from the group consisting of magnesium, calcium, aluminum, with anions of monovalent or polyvalent mono- or polyhydroxycarboxylic acids.

6. The use according to claim 1, characterized in that the stabilizer concentrate comprises 0.05 to 5 % by weight, in particular 0.05 to 1 % by weight, of alkyl(C₄₋₁₆)oligosaccharide.

## Revendications

1. Utilisation d'un concentré d' agents stabilisants stable pendant le stockage, liquide, bien soluble et biodégradable pour des solutions aqueuses de blanchiment et de traitement à base de peroxyde d'hydrogène et/ou d' autres composés peroxo inorganiques et/ou organiques, pour la fabrication de la pâte mécanique, de la pâte de cellulose et du papier, ainsi que pour le désencrage des vieux papiers, ainsi que pour le traitement de tricots et de tissus contenant de la cellulose, formé de la combinaison des composants suivants:
(a) silicates solubles dans l'eau, en particulier des silicates alcalins,
(b) complexes hydrosolubles de métaux polyvalents choisis dans l'ensemble constitué par le magnésium, le calcium et l'aluminium, avec des anions de mono- ou de polyacides mono- ou polyhydroxycarboxyliques,
(c) des hydroxydes alcalins,
(d) éventuellement d'autres adjuvants choisis dans l'ensemble constitué par les agents de solubilisation et les agents tensioactifs, en particulier les alkyl(C₄₋₁₆)-oligosaccharides.

2. Utilisation selon la revendication 1, caractérisée en ce que les silicates alcalins (a) solubles dans l'eau sont des silicates de lithium, de sodium ou de potassium ou des silicates de bases azotées organiques avec un rapport molaire de SiO₂ à M₂O de 0,5 à 3,3, en particulier de 1,5 à 3,0.

3. Utilisation selon la revendication 1, caractérisée en ce que les acides hydroxycarboxyliques présentent de 2 à 10 atomes de carbone et ont une chaîne carbonée à structure linéaire ou ramifiée.

4. Utilisation selon l'une des revendications précédentes, caractérisée en ce que l'acide hydroxycarboxylique est un acide carboxylique de sucre obtenu à partir de sucres du groupe des pentoses, des hexoses et des heptoses, en particulier l'acide gluconique et/ou l'acide glucoheptonique.

5. Utilisation selon l'une des revendications précédentes, caractérisée en ce que le concentré d'agents stabilisants contient de 20 à 40 % en poids, en particulier de 30 à 40 % en poids, de silicates solubles dans l'eau, de 0,01 à 20 % en poids, en particulier de 0,1 à 10 % en poids, de complexes solubles dans l'eau de métaux polyvalents choisis dans l'ensemble constitué par le magnésium, le calcium et l'aluminium, avec des anions de mono- ou de polyacides mono- ou polyhydroxycarboxyliques.

6. Utilisation selon la revendication 1, caractérisée en ce que le concentré d'agents stabilisants contient de 0,05 à 5 % en poids, en particulier de 0,05 à 1 % en poids, d'un alkyl(C₄₋₁₆)-oligosaccharide.
